# EUROPEAN PATENT SPECIFICATION

(11) **EP 3 506 695 B1**
(45) Date of publication and mention of the grant of the patent: **25.03.2020**
(21) Application number: 16917161.8
(22) Date of filing: 29.09.2016
(51) Int. Cl.: H04W 72/04

(54) **METHOD AND DEVICE FOR RELEASING SEMI-PERSISTENT SCHEDULING RESOURCE**
VERFAHREN UND VORRICHTUNG ZUR AUSGABE EINER SEMI-PERSISTENTEN PLANUNGSRESSOURCE
PROCÉDÉ ET DISPOSITIF DE LIBÉRATION DE RESSOURCE DE PROGRAMMATION SEMI-PERSISTANTE

(43) Date of publication of application: 03.07.2019
(73) Proprietor: Huawei Technologies Co., Ltd., Longgang District Shenzhen, Guangdong 518129 (CN)
(72) Inventor: LU, Zhenwei, Shenzhen Guangdong 518129 (CN); LIU, Deping, Shenzhen Guangdong 518129 (CN)
(74) Representative: Isarpatent
(86) International application number: PCT/CN2016/100738
(87) International publication number: WO 2018/058407

(56) References cited:
- WO-A1-2015/058382
- CN-A- 105 681 439
- US-A1- 2016 278 053
- HUAWEI ET AL: "SPS enhancement for V2V", 3GPP DRAFT; R1-166167, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140087, Retrieved from the Internet: URL:http://www.3gpp.org/ftp/Meetings_3GPP_ SYNC/RAN1/Docs/ [retrieved on 2016-08-21]
- PANASONIC: "Discussion on DCI design in V2V", 3GPP DRAFT; R1-166970, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140472, Retrieved from the Internet: URL:http://www.3gpp.org/ftp/Meetings_3GPP_ SYNC/RAN1/Docs/ [retrieved on 2016-08-21]
- HUAWEI et al.: "SPS enhancement for V2V", R1-166167. 3GPP TSG RAN WG1 Meeting #86, 26 August 2016 (2016-08-26), XP051140087,
- HUAWEI et al.: "SPS enhancement on Uu for V2X", R1-166170. 3GPPTSG RAN WG1 Meeting #86, 26 August 2016 (2016-08-26), XP051140090,

## Description

### TECHNICAL FIELD

The present invention relates to the field of communications technologies, and in particular, to methods for releasing a semi-persistent scheduling resource as well as a base station and a user equipment for releasing a semi-persistent scheduling resource.

### BACKGROUND

In a Long Term Evolution (LTE) communications system, a semi-persistent scheduling (SPS) allows a radio resource to be configured in a semi-persistent manner, and the resource is periodically allocated to user equipment (UE).

In the prior art, when an SPS is applied to a device-to-device (D2D) scenario or a vehicle-to-vehicle (V2V) scenario, UE may use the SPS to transmit a plurality of different types of service data. In this case, a base station configures a plurality of sets of SPS configuration parameters for the UE, and the UE may communicate with the base station and/or another UE by using a plurality of SPS resources. When the service data of the UE changes, for example, a cycle changes, the UE reports service change information to the base station, and the base station sends activation downlink control information (DCI), to instruct the UE to activate a new SPS resource. The base station also sends release DCI to the UE, to instruct the UE to release an original SPS resource.

However, one piece of DCI can be used to instruct a related operation on only one SPS. For example, two pieces of DCI are required to activate a new SPS resource and release an original SPS resource. When a plurality of SPSs change, a plurality of pieces of DCI are required, causing relatively large signaling overheads.

In the published patent prior art, the following document relates to the technological background of the present invention:
D1 HUAWEI ET AL: "SPS enhancement for V2V", 3GPP DRAFT; R1-166167, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20160822 - 20160826 21 August 2016 (2016-08-21), XP051140087, Retrieved from the Internet: URL:http://www.3gpp.org/ftp/Meetings_3GPP_SYNC/RAN1/Docs/ [retrieved on 2016-08-21]
D2 PANASONIC: "Discussion on DCI design in V2V", 3GPP DRAFT; R1-166970, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20160822 - 20160826 21 August 2016 (2016-08-21), XP051140472,

Document D1, relating to the above described background of the invention, relates to a method for releasing a semi-persistent scheduling resource and discloses that when the period of service data messages is changed, the SPS configuration needs to be modified. The UE needs to notify the eNB with, e.g. a new period, to adjust the configuration of SPS. Hence, D1 discloses that when the period is changed, the UE notifies the eNB with the new period, and the eNB will active a suitable SPS configuration to the UE, when the period is changed, that eNB will choose a suitable one and configure it for UE via DCI, and that a new field can be included in the DCI to indicate the index of SPS processes, wherein the SPS index in the DCI is used to differentiate certain SPS configurations.

Document D2 describes that an ENB could activate new SPS configurations and release old SPS configurations simultaneously. When the UE receives an activation signalling, it will automatically release previous SPS configurations and carry out a new SPS configuration.

### SUMMARY

The object of the present invention is to provide methods, a base station and a user equipment which can reduce signaling overheads for releasing a semi-persistent scheduling resource. According to the invention, only one piece of DCI is required to instruct to activate an SPS resource and release an SPS resource, thereby reducing signaling overheads. The object is solved by methods according to claims 1 and 5, a base station according to claim 9 and a user equipment according to claim 13. Further advantageous embodiments and improvements of the invention are listed in the dependent claims. Further aspects of the invention which contribute to the understanding of the invention are listed in the dependent claims.

According to a first aspect, the present invention provides a method for releasing a semi-persistent scheduling resource, including:
receiving, by a base station, service information sent by UE, where the service information includes first service information of first service data, the first service information includes service change information or initial configuration information, and the service change information includes at least one of cycle change information and update information, and optionally, the initial configuration information includes at least one of a size of new first service data, an arrival moment, and a cycle, the cycle change information includes a new cycle of the first service data, and the update information includes a new size of the first service data and/or an arrival moment of the first service data; determining, by the base station based on the first service information, semi-persistent scheduling SPS information corresponding to the first service data, where the SPS information includes indication information of a new SPS resource, and optionally, the indication information of the new SPS resource includes indication information of a time-domain resource and indication information of a frequency-domain resource; and sending, by the base station, downlink control information DCI to the UE, where the DCI includes the SPS information, and the DCI is used to instruct the UE to activate the new SPS resource and release a target SPS resource, where the target SPS resource is an SPS resource corresponding to second service data that has been transmitted. In this embodiment of the present invention, the DCI is used to explicitly instruct the UE to activate the new resource, and to implicitly instruct the UE to release the target resource. That is, a function of activating the resource and releasing the resource is implemented by using one piece of DCI, reducing signaling overheads.

In a possible design, the service information further includes second service information corresponding to the second service data, and the second service information includes data sending completion information and an identifier of a second SPS corresponding to the second service data, and optionally, the data sending completion information is used to indicate that the second service data has been transmitted, and the identifier of the second SPS may be specifically an index of the second SPS;
the SPS information further includes an identifier of a first SPS corresponding to the new SPS resource;
the target SPS resource includes a resource corresponding to the identifier of the second SPS; and
after the sending, by the base station, DCI to the UE, the method further includes:
releasing, by the base station, the target SPS resource based on the identifier of the second SPS.

In a possible design, the second service data belongs to one piece of multi-cycle service data, where the multi-cycle service data includes a plurality of pieces of correlated service data in different cycles, and service data in each cycle is corresponding to a SPS resource;
the target SPS resource includes resources corresponding to the service data in the cycles; and
the releasing, by the base station, the target SPS resource based on the identifier of the second SPS includes:
releasing, by the base station, the target SPS resource based on an association relationship between the identifier of the second SPS and an identifier of another SPS.

In a possible design, the method further includes:
receiving, by the base station, the association relationship sent by the UE, which is specifically: when sending, by the UE, the service data, performing, by the UE, detection on the service data to obtain the association relationship, and sending the association relationship to the base station; or
sending, by the base station, the association relationship to the UE, which is specifically: when obtaining, by the base station, the association relationship based on the service information of the data reported by the UE, and sending the association relationship to the UE.

In a possible design, if the service change information includes the cycle change information, or the service change information includes the cycle change information and the update information, and the first service data includes service data whose transmission cycle is a first cycle and service data whose transmission cycle is a second cycle, the second service data is the service data whose transmission cycle is the first cycle, where the first cycle is a cycle before a change, and the second cycle is a cycle after the change;
the first service information further includes an identifier of an original first SPS corresponding to the service data whose transmission cycle is the first cycle;
the SPS information further includes an identifier of a new first SPS corresponding to the new SPS resource, where the new SPS resource is a resource corresponding to the service data whose transmission cycle is the second cycle;
the target SPS resource includes a resource corresponding to the identifier of the original first SPS; and
after the sending, by the base station, DCI to the UE, the method further includes:
releasing, by the base station, the target SPS resource based on the identifier of the original first SPS.

In a possible design, the method further includes:
sending, by the base station, release instruction information to the UE, where the release instruction information is used to instruct to enable a function that the DCI is used to instruct to release the target resource.

In a possible design, the release instruction information is specifically one of the following:
system information, radio resource control RRC signaling, media access control MAC layer signaling, and physical layer signaling. After one configuration, the release instruction information may be used a plurality of times in a relatively long time period. A person skilled in the art may understand that the physical layer signaling may alternatively be DCI sent by a base station to UE. The DCI includes an indication field, and in this case, a current indication takes effect at a current time.

According to a second aspect, the present invention provides a method for releasing a semi-persistent scheduling resource, including:
sending, by user equipment UE, service information to a base station, where the service information includes first service information of first service data, the first service information includes service change information or initial configuration information, and the service change information includes at least one of cycle change information and update information;
receiving, by the UE, downlink control information DCI sent by the base station, where the DCI includes semi-persistent scheduling SPS information corresponding to the first service data, the SPS information is determined by the base station based on the first service information, the SPS information includes indication information of a new SPS resource, and the DCI is used to instruct the UE to activate the new SPS resource and release a target SPS resource; and
activating, by the UE, the new SPS resource and releasing the target SPS resource according to an instruction of the DCI, where the target SPS resource is an SPS resource corresponding to second service data that has been transmitted.

In another possible design, for specific content included in the service information, the SPS information, and the target SPS resource, refer to the foregoing descriptions. Details are not described herein again.

According to a third aspect, the present invention provides a method for releasing a semi-persistent scheduling resource, including:
sending, by UE, service information to a base station, where the service information includes data sending completion information of M pieces of third service data and identifiers of M third SPSs, and M is a positive integer;
sending, by the base station, DCI to the UE, where the DCI includes identifiers of K SPSs, and the DCI is used to instruct to release resources corresponding to the identifiers of the M third SPSs; and K is a non-negative integer, and K ≤ M;
releasing, by the UE according to an instruction of the DCI, the resources corresponding to the identifiers of the M third SPSs; and
releasing, by the base station, the resources corresponding to the identifiers of the M third SPSs.

Different from DCI used for activation or update, the DCI in this embodiment does not need to indicate time-and-frequency-domain resources, so that bits originally used to indicate the time-and-frequency-domain resources may be reused to indicate indexes of SPSs of to-be-released resources, adding no additional bits to the DCI. In this embodiment, when no new SPS resources need to be activated, the resources corresponding to identifiers of a plurality of SPSs may be released simultaneously, reducing signaling overheads of the DCI.

According to a fourth aspect, the present invention provides a base station, including:
a receiving unit, configured to receive service information sent by UE, where the service information includes first service information of first service data, the first service information includes service change information or initial configuration information, and the service change information includes at least one of cycle change information and update information;
a processing unit, configured to determine, based on the first service information, semi-persistent scheduling SPS information corresponding to the first service data, where the SPS information includes indication information of a new SPS resource; and
a sending unit, configured to send downlink control information DCI to the UE, where the DCI includes the SPS information, and the DCI is used to instruct the UE to activate the new SPS resource and release a target SPS resource, where the target SPS resource is an SPS resource corresponding to second service data that has been transmitted.

Based on a same invention concept, for principle and beneficial effects of resolving a problem by the base station, refer to the first aspect, the possible designs of the first aspect, and the beneficial effects thereof. Therefore, for implementation of the base station, refer to the method implementation, and details are not repeated.

According to a fifth aspect, an embodiment of the present invention provides user equipment, including:
a sending unit, configured to send service information to a base station, where the service information includes first service information of first service data, the first service information includes service change information or initial configuration information, and the service change information includes at least one of cycle change information and update information;
a receiving unit, configured to receive downlink control information DCI sent by the base station, where the DCI includes semi-persistent scheduling SPS information corresponding to the first service data, the SPS information is determined by the base station based on the first service information, the SPS information includes indication information of a new SPS resource, and the DCI is used to instruct the UE to activate the new SPS resource and release a target SPS resource; and
a processing unit, configured to activate the new SPS resource and release the target SPS resource according to an instruction of the DCI, where the target SPS resource is an SPS resource corresponding to second service data that has been transmitted.

Based on a same invention concept, for principle and beneficial effects of resolving a problem by the user equipment, refer to the second aspect, the possible designs of the second aspect, and the beneficial effects thereof. Therefore, for implementation of the user equipment, refer to the method implementation, and details are not repeated.

According to a sixth aspect, the present invention provides a base station, including a processor and a memory, where
the memory is configured to store computer-executable program code, where the program code includes an instruction; and when the processor executes the instruction, the instruction enables the processor to execute the method for releasing the semi-persistent scheduling resource implemented according to any one of the first aspect and the possible designs of the first aspect.

According to a seventh aspect, the present invention provides user equipment, including: a processor and a memory, where
the memory is configured to store computer-executable program code, where the program code includes an instruction; and when the processor executes the instruction, the instruction enables the processor to execute the method for releasing the semi-persistent
scheduling resource implemented according to any one of the second aspect and the possible designs of the second aspect.

The aspects provide the method for releasing a semi-persistent scheduling resource and the device. In the method, the UE sends the service information to the base station, where the service information includes the first service information of the first service data; and the base station determines, based on the first service information, the SPS information corresponding to the first service data, and sends the DCI including the SPS information to the UE, where the SPS information includes the indication information of the new SPS resource, and the DCI may instruct the UE to activate the new SPS resource and release the SPS resource corresponding to the second service data that has been transmitted, that is, the DCI explicitly instructs the UE to activate the new SPS resource and implicitly instructs the UE to release the SPS resource corresponding to the second service data, so that one piece of DCI is used to implement resource activation and release, reducing signaling overheads.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show some embodiments of the present invention, and a person of ordinary skill in the art may derive other drawings from these accompanying drawings without creative efforts.
FIG. 1 is a network architecture to which an embodiment of the present invention may be applicable;
FIG. 2 is a signaling flowchart 1 of a method for releasing an SPS resource according to an embodiment of the present invention;
FIG. 3 is a signaling flowchart 2 of a method for releasing an SPS resource according to an embodiment of the present invention;
FIG. 4 is a signaling flowchart 3 of a method for releasing an SPS resource according to an embodiment of the present invention;
FIG. 5 is a signaling flowchart 4 of a method for releasing an SPS resource according to an embodiment of the present invention;
FIG. 6 is a schematic structural diagram of a base station according to an embodiment of the present invention;
FIG. 7 is a schematic structural diagram of hardware of a base station according to an embodiment of the present invention;
FIG. 8 is a schematic structural diagram of user equipment according to an embodiment of the present invention; and
FIG. 9 is a schematic structural diagram of hardware of a base station according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Network architectures and business scenarios described in the embodiments of the present invention are intended to more clearly describe the technical solutions in the embodiments of the present invention, but are not intended to limit the technical solutions provided in the embodiments of the present invention. A person of ordinary skill in the art may know that as the network architectures evolve and a new business scenario emerges, the technical solutions provided in the embodiments of the present invention are further applicable to a similar technical problem.

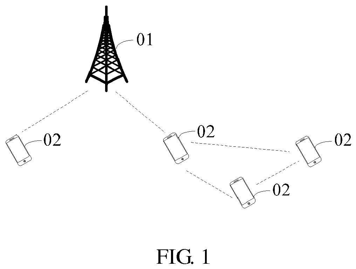

The following describes a possible network architecture according to an embodiment of the present invention with reference to FIG. 1. FIG. 1 is a network architecture to which an embodiment of the present invention may be applicable. As shown in FIG. 1, the network architecture provided in this embodiment includes a base station 01 and user equipment (UE) 02. The UE in this embodiment of the present invention may include various handheld devices, in-vehicle devices, wearable devices, and computing devices that have a wireless communication function, or another processing device connected to a wireless modem, various forms of terminal devices, a mobile station (MS), and the like. For ease of description, the devices mentioned above are collectively referred to as UE. The base station (BS) in this embodiment of the present invention is an apparatus that is configured to provide the UE with a wireless communication function and that is deployed in a radio access network. The base station may include various forms of macro base stations, micro base stations, relay nodes, access points, and the like.

In this embodiment, when communicating with the base station, the UE may further implement device-to-device (D2D) communication with another UE. When the UE is an in-vehicle device, vehicle-to-vehicle (V2V) communication may be implemented between in-vehicle devices.

In this embodiment, a D2D communication scenario is used as an example. When the UE is located in a cell coverage area of the base station, the UE can communicate with both the base station and another UE. Communication between UEs may be directly performed without forwarding by the base station, and the base station may perform resource configuration, scheduling, coordination, and the like, to assist the direct communication between the UEs. Before performing data transmission, the UE first applies to the base station for a semi-persistent scheduling (SPS) resource, and reports service information of the UE to the base station. The base station allocates a corresponding resource to the UE based on the service information reported by the UE.

The SPS resource in this embodiment may be a sidelink SPS resource, namely, an SPS resource corresponding to an air interface between the UEs. The SPS resource may be further an SPS resource corresponding to an air interface between the UE and the base station. An SPS resource described in the following embodiments may be specifically at least one of the foregoing.

When the base station allocates the SPS resource to the UE, the base station may first send SPS configuration information to the UE. The SPS configuration information includes an SPS radio network temporary identifier (RNTI) and a plurality of sets of SPS configuration parameters, and each set of the SPS configuration parameter may include a cycle and the like. Then, the base station sends, to the UE, downlink control information (DCI) scrambled by using an SPS-RNTI. The DCI includes indication information of a new SPS resource. Specifically, a time-domain resource used when service data is transmitted for a first time depends on a moment at which the DCI is delivered (a subsequent N^{th} subframe), for example, N = 4. During subsequent retransmission, a time-domain resource is indicated by time-domain resource indication information in the DCI, and a frequency-domain resource is indicated by frequency-domain resource indication information in the DCI. After the UE receives the DCI, the SPS resource is activated, and the UE periodically sends service data by using the SPS resource. When the UE completes transmitting the service data by using the SPS resource, the UE needs to release the SPS resource.

For a process in which the UE releases the SPS resource, this embodiment of the present invention provides a method for releasing the SPS resource, to resolve a prior-art problem that two pieces of DCI are required to activate a new SPS resource and release an original SPS resource, causing relatively large signaling overheads, or to resolve a similar problem.

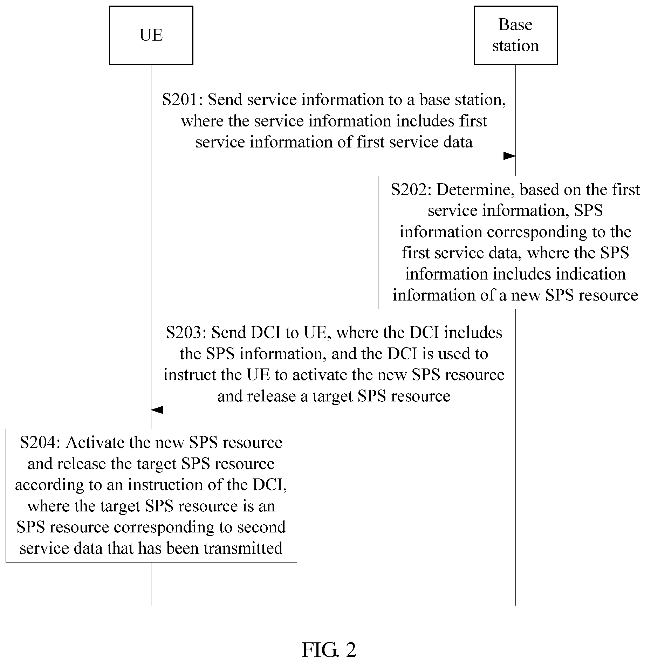

FIG. 2 is a signaling flowchart 1 of a method for releasing an SPS resource according to an embodiment of the present invention. The signaling flowchart mainly describes an interactive process between a base station and UE. As shown in FIG. 2, the method includes the following steps.

S201: UE sends service information to a base station, where the service information includes first service information of first service data.

When the service data changes, the UE sends the service information to the base station. The service information includes first service information of first service data, the first service information includes service change information or initial configuration information, and the service change information includes at least one of cycle change information and update information.

A form of the first service data may be specifically classified into the following several possible cases: The first service data is data whose cycle changes. The first service information includes the cycle change information, and the cycle change information includes a new cycle of the first service data. Specifically, the first service data includes service data whose transmission cycle is a first cycle and service data whose transmission cycle is a second cycle. The first cycle is a cycle before a change, the second cycle is a cycle after a change, and the service data whose transmission cycle is the first cycle has been transmitted.

The first service data is data whose data size, and/or data arrival moment, and the like change. The first service information includes update information, and the update information includes a new size of the first service data and/or an arrival moment of the first service data. Specifically, the first service data includes original data and updated information, and the original data has been transmitted.

When the first service data is data whose cycle changes and data size and/or data arrival moment, and the like change, the first service information includes the cycle change information and the update information. Specifically, the first service data includes data before the change and data after the change, and the data before the change has been transmitted.

When the first service data is new service data, the first service information includes the initial configuration information. The initial configuration information includes at least one of a size, an arrival moment, a cycle of the new data, and the like.

S202: The base station determines, based on the first service information, SPS information corresponding to the first service data, where the SPS information includes indication information of a new SPS resource.

The base station receives the service information sent by the UE, and the base station determines, based on the first service information, for example, the service change information or the initial configuration information in the first service information, the SPS information corresponding to the first service data, where the SPS information includes the indication information of the new SPS resource allocated by the base station to the first service data.

For example, if the first service information includes the initial configuration information, the new SPS resource is allocated for the new first service data. If the first service information includes the service change information, the new SPS resource is allocated for the service data whose transmission cycle is the second cycle, the updated data, or the data after the change.

S203: The base station sends DCI to the UE, where the DCI includes the SPS information, and the DCI is used to instruct the UE to activate the new SPS resource and release a target SPS resource.

The base station sends the DCI to the UE. Optionally, to enable the UE to identify that the secluding is SPS scheduling, the base station scrambles the DCI by using an SPS-RNTI. After receiving the DCI, the UE descrambles the DCI, to obtain the SPS information. The SPS information is used to indicate frequency-domain information of the new SPS resource, and time-domain information of the new SPS resource depends on a delivering moment of the DCI (a subsequent fourth subframe). The SPS information in the DCI is used to instruct the UE to activate the new SPS resource. Further, the DCI is further used to instruct the UE to release a target resource, and the target resource is an SPS resource corresponding to second service data that has been transmitted. That is, the DCI does not include related information about the target resource, but the DCI has an implicit indication function.

S204: The UE activates the new SPS resource and releases the target SPS resource according to an instruction of the DCI, where the target SPS resource is an SPS resource corresponding to second service data that has been transmitted.

After the UE receives the DCI sent by the base station, UE activates the new SPS resource and releases the target SPS resource according to an instruction of the DCI. That is, although the DCI does not include the related information about the target SPS resource, the DCI has the implicit indication function, so that the UE releases the target SPS resource when activating the new SPS resource. That is, functions of activating the resource and releasing the resource are implemented by using only one piece of DCI.

Optionally, in this embodiment, the DCI also has an implicit indication function of releasing the target resource when having an explicit indication function of activating the new SPS resource. This may be agreed upon in advance between the UE and the base station, may be defaulted by a system, or may be indicated by the base station to the UE.

For example, before the base station sends the DCI to the UE, the base station may alternatively send release instruction information to the UE, and the UE receives the release instruction information sent by the base station. The release instruction information is used to instruct to enable a function that the DCI is used to instruct to release the target resource. Optionally, a corresponding indication field may be added in the release instruction information. The release instruction information may be system information, radio resource control (RRC) signaling, media access control (MAC) layer signaling, and physical layer signaling. After one configuration, the release instruction information may be used a plurality of times in a relatively long time period. A person skilled in the art may understand that the physical layer signaling may alternatively be DCI sent by a base station to UE. The DCI includes an indication field, and in this case, a current indication takes effect at a current time.

A person skilled in the art may understand that the release instruction information may alternatively instruct to disable the function that the DCI is used to instruct to release the target resource. In this case, after receiving the DCI, the UE only activates the new SPS resource, and does not perform an operation of releasing the target resource. For example, a 1-bit indication field exists in the release instruction information. When the indication field indicates 0, the function that the DCI is used to instruct to release the target resource is disabled. When the indication field indicates 1, the function that the DCI is used to instruct to release the target resource is enabled.

That the UE activates the new SPS resource indicates that the UE starts to use the SPS resource to perform data transmission. That the UE releases the target SPS resource indicates that the UE does not use the SPS resource, the SPS resource becomes an available resource, and the base station may allocate the resource to another UE.

In this embodiment, the target resource is an SPS resource corresponding to second service data that has been transmitted. That is, the second service data has been transmitted, and the resource corresponding to the second service data can be released.

The target resource may specifically include a resource corresponding to data that has been transmitted and a resource in the following forms: a resource corresponding to data whose transmission cycle is a first cycle, a resource corresponding to the service data before an update, and a resource corresponding to the service data before a change. The latter three may be specifically determined based on a content included in the first service information.

According to the method for releasing a semi-persistent scheduling resource in this embodiment, the UE sends the service information to the base station, where the service information includes the first service information of the first service data, and the base station determines, based on the first service information, the SPS information corresponding to the first service data, and sends the DCI including the SPS information to the UE, the SPS information includes the indication information of the new SPS resource, and the DCI may instruct the UE to activate the new SPS resource and release the SPS resource corresponding to the second service data that has been transmitted, that is, the DCI explicitly instructs the UE to activate the new SPS resource and implicitly instructs the UE to release the SPS resource corresponding to the second service data, so that one piece of DCI is used to implement resource activation and release, reducing signaling overheads.

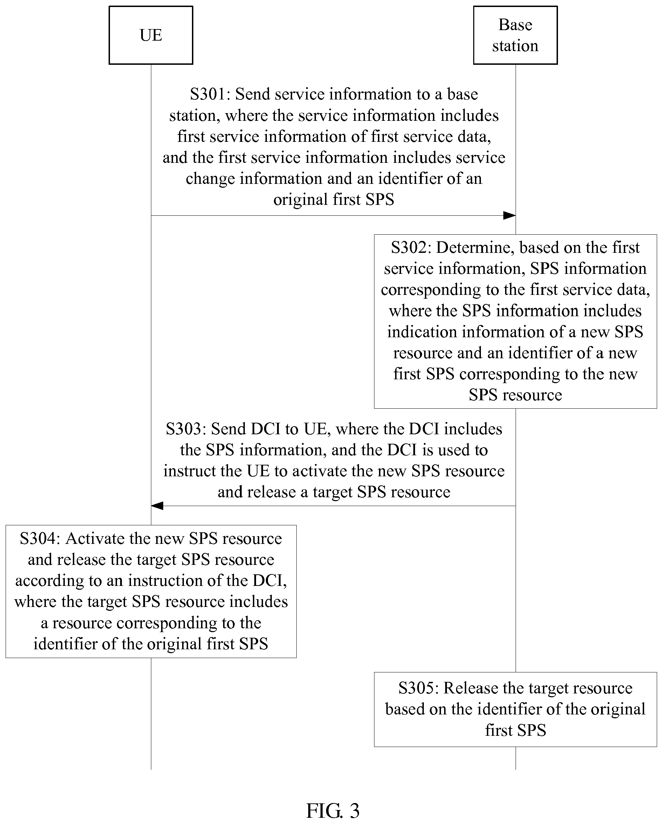

In the following embodiment shown in FIG. 3, an example in which first service information includes service change information and the service change information includes at least cycle change information is used to describe in detail a method for releasing an SPS resource provided in this embodiment of the present invention.

FIG. 3 is a signaling flowchart 2 of a method for releasing an SPS resource according to an embodiment of the present invention. As shown in FIG. 3, the method includes the following steps.

S301: UE sends service information to a base station, where the service information includes first service information of first service data, and the first service information includes service change information and an identifier of an original first SPS.

Specifically, the service change information includes cycle change information, or the service change information includes the cycle change information and update information, and correspondingly, the first service data includes service data whose transmission cycle is a first cycle and service data whose transmission cycle is a second cycle, the second service data in the embodiment shown in FIG. 2 is the service data whose transmission cycle is the first cycle in this embodiment, where the first cycle is a cycle before a change, and the second cycle is a cycle after the change.

The first service information further includes an identifier of an original SPS corresponding to the service data whose transmission cycle is the first cycle, to instruct the base station to release a resource corresponding to the identifier of the original first SPS.

S302: The base station determines, based on the first service information, SPS information corresponding to the first service data, where the SPS information includes indication information of a new SPS resource and an identifier of a new first SPS corresponding to the new SPS resource.

For a process that the base station determines the indication information of the new SPS resource, refer to S202, and details are not described in this embodiment again. In this embodiment, the base station further determines the identifier of the new first SPS corresponding to the new SPS resource.

S303: The base station sends DCI to the UE, where the DCI includes the SPS information, and the DCI is used to instruct the UE to activate the new SPS resource and release a target SPS resource.

S304: The UE activates the new SPS resource and releases the target SPS resource according to an instruction of the DCI, where the target SPS resource includes a resource corresponding to the identifier of the original first SPS.

In this embodiment, because the service data whose transmission cycle is the first cycle has been transmitted, the target SPS resource includes the resource corresponding to the identifier of the original first SPS. For a process that the UE activates the new SPS resource and releases the target SPS resource, refer to S203 and S204 in the embodiment shown in FIG. 2, and details are not described in this embodiment again.

S305: The base station releases the target resource based on the identifier of the original first SPS.

A person skilled in the art may understand that there is no strict time sequence relationship between S304 and S305. Specifically, it can be learned from S301 that the first service information includes the identifier of the original first SPS, and the resource corresponding to the identifier of the original first SPS is the resource corresponding to the service data whose transmission cycle is the first cycle, namely, the resource corresponding to the identifier of the original first SPS. The resource has been transmitted, and is no longer used by the UE, and the base station has sent the DCI to implicitly instruct to release the resource corresponding to the identifier of the original first SPS. Therefore, the base station releases the target resource, and the target resource includes the resource corresponding to the identifier of the original SPS.

The following uses a specific embodiment as an example for detailed description. The UE activates one SPS resource to send cyclic data whose cycle is 200 ms, and an index of the SPS is 2 (an identifier of an original first SPS). Then, the cycle of the cyclic data of the UE changes to 100 ms, the UE reports the first service information to the base station. The first service information includes an index 2 of an SPS, a new cycle 100 ms of the data, and/or an arrival moment of the data. After receiving the first service information, the base station sends DCI scrambled by using an SPS RNTI to the UE, to instruct the UE to use a new SPS whose index is 3 (an identifier of a new first SPS) and cycle is 100 ms. The DCI indicates the index 3 of the new SPS, a time-frequency position of the SPS resource, and the like. The UE sends the data whose new cycle is 100 ms on the SPS resource whose index is 3 and releases the SPS resource whose index is 2, based on the DCI sent by the base station.

On condition that the service change information at least includes the cycle change information in this embodiment, one piece of DCI rather than two pieces of DCI is required to explicitly instruct the UE to activate the new resource, and to implicitly instruct the UE to release the resource used before a change, reducing signaling overheads of the base station.

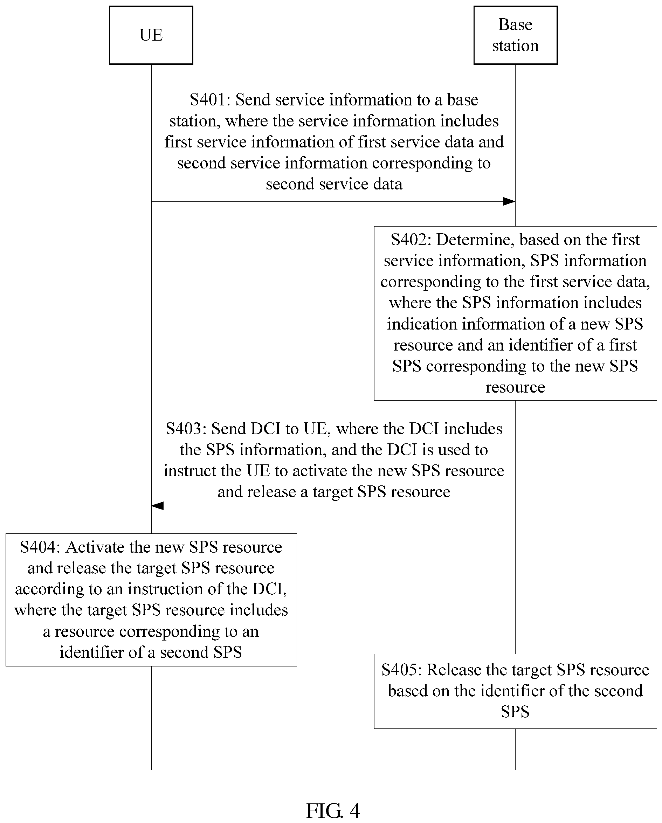

On a basis of the embodiments shown in FIG. 2 and FIG. 3, a resource released in this embodiment may alternatively be another resource corresponding to second service data that has been transmitted. For a specific implementation process, refer to FIG. 4.

FIG. 4 is a signaling flowchart 3 of a method for releasing an SPS resource according to an embodiment of the present invention. As shown in FIG. 4, the method includes the following steps.

S401: UE sends service information to a base station, where the service information includes first service information of first service data and second service information corresponding to second service data.

For an implementation of the first service information of the first service data, refer to S201, and details are not further described herein in this embodiment. The second service data is specifically data that has been transmitted, and the second service information correspondingly includes data sending completion information and an identifier of a second SPS corresponding to the second service data. The data sending completion information is used to indicate that the second service data has been transmitted. The identifier of the second SPS may be specifically an index of the second SPS. All SPS identifiers in this embodiment may be SPS indexes. The index of each SPS is corresponding to indication information of the resource allocated by the base station for the SPS, a cycle of the SPS, a size of the service data, and the like.

In this embodiment, when applying for a new SPS resource for the first service data, the UE may also report the identifier of the second SPS of the second service data that has been transmitted, to instruct the base station to release a resource corresponding to the identifier of the second SPS.

S402: The base station determines, based on the first service information, SPS information corresponding to the first service data, where the SPS information includes indication information of a new SPS resource and an identifier of a first SPS corresponding to the new SPS resource.

For a process that the base station determines the indication information of the new SPS resource, refer to S202, and details are not described in this embodiment again. In this embodiment, the base station further determines the identifier of the first SPS corresponding to the new SPS resource, namely, an index of the first SPS.

S403: The base station sends DCI to the UE, where the DCI includes the SPS information, and the DCI is used to instruct the UE to activate the new SPS resource and release a target SPS resource.

S404: The UE activates the new SPS resource and releases the target SPS resource according to an instruction of the DCI, where the target SPS resource includes a resource corresponding to an identifier of a second SPS.

In this embodiment, the implementation steps of S403 and S404 are similar to those of S203 and S204 in the embodiment in FIG. 2, and details are not described in this embodiment again.

It should be noted that, in this embodiment, the UE may send the second service information of a plurality of pieces of the second service data, and therefore when releasing the resource corresponding to the identifier of the second SPS, the UE may release a plurality of resources. That is, when explicitly instructing to activate the new resource, one piece of DCI can implicitly instruct to release a plurality of resources, reducing signaling overheads.

S405: The base station releases the target SPS resource based on the identifier of the second SPS.

A person skilled in the art may understand that there is no strict time sequence relationship between step 404 and step 405. Specifically, it can be learned from S401 that the second service information includes the data sending completion information and the identifier of the second SPS corresponding to the second service data. The base station may learn, based on the second service information, that the second service data has been transmitted, the UE does not need the resource corresponding to the identifier of the second SPS, and the base station has already sent the DCI to the UE to implicitly instruct to release the resource corresponding to the identifier of the second SPS. Therefore, the base station also releases the resource corresponding to the identifier of the second SPS corresponding to the second service data, that is, the base station determines that the resource corresponding to the identifier of the second SPS is a resource that can be allocated to another UE.

A person skilled in the art may understand that, in S402, the identifier of the first SPS included in the SPS information is intended to make the UE store the identifier of the first SPS corresponding to the new SPS resource. When the UE completes transmitting the first service data by using the new SPS resource, the UE may report the identifier of the first SPS, to make the base station release the resource corresponding to the identifier of the first SPS.

A person skilled in the art may understand that when releasing the resource corresponding to the identifier of the second SPS, the base station may further release one of a resource corresponding to data whose transmission cycle is a first cycle, a resource corresponding to service data before an update, and a resource corresponding to service data before a change. Which resource is specifically released is determined by content included in the first service information.

The following uses a specific embodiment as an example for detailed description. When service data changes, for example, the second service data has been transmitted, and the new cyclic first service data is to be transmitted, the UE reports service information to the base station, including initial configuration information of the first service data and the data sending completion information of the second service data. The base station sends, to the UE, activation DCI scrambled by using an SPS RNTI. The activation DCI includes SPS information, where the SPS information includes indication information used to indicate a new SPS resource, and further includes the identifier (index) of the first SPS corresponding to the new SPS resource. The DCI further implicitly instructs the UE to release the resource corresponding to the identifier of the second SPS. The UE periodically sends data on the new SPS resource, and releases the resource corresponding to the identifier of the second SPS.

For example, the UE activates the resource corresponding to the identifier of the second SPS to send cyclic service data whose cycle is 200 ms, and an index of the SPS is 2. After the service data has been transmitted, the new cyclic first service data happens to arrive and waits to be transmitted, and a cycle is 100 ms. In this case, the UE reports the service information to the base station, including the index 2 of the SPS, information indicating that the data has been transmitted and the new cyclic first service data is to be transmitted, the new cycle 100 ms, and/or an arrival moment of the first service data. After receiving the service information, the base station sends, to the UE, the activation DCI scrambled by using the SPS RNTI, to instruct the UE to use the new SPS resource whose cycle is 100 ms, and to implicitly release a resource corresponding to the original SPS whose index is 2. The activation DCI indicates that the index corresponding to the new SPS resource is 3, a time-frequency position of the new SPS resource, and the like. Based on the activation DCI sent by the base station, the UE sends the first service data on the new SPS resource whose index is 3 and implicitly releases the resource corresponding to the original SPS whose index is 2.

A person skilled in the art may understand that, in this process, the released resource corresponding to the identifier of the second SPS may be a resource corresponding to an identifier of one second SPS, or may be resources corresponding to identifiers of a plurality of second SPSs. The released SPS resource and the activated new SPS resource are independent of each other, and they have no a continuation or replacement relationship, but are merely close in time.

The foregoing solution may also be applied to a process in which updating and releasing SPS resource are simultaneously performed. For example, the UE activates the resource corresponding to the identifier of the second SPS to send the cyclic service data whose cycle is 200 ms, and the index of the SPS is 2. After the service data is transmitted, a data size of the first service data changes and/or the arrival moment of the service data happens to change, but a cycle does not change. The UE reports the service information to the base station, including that the index of the SPS is 2, information indicating data sending completion, and update information of the first service data. After receiving the service information, the base station sends, to the UE, the update DCI scrambled by using the SPS RNTI, to instruct the UE to use the new SPS resource, and to implicitly release a resource corresponding to the original SPS whose index is 2. The update DCI also indicates a time-frequency position of the new SPS resource, and the like, and an index of the new SPS resource is unchanged. Based on the update DCI sent by the base station, the UE sends the first service data on the new SPS resource and implicitly releases the resource corresponding to the original SPS whose index is 2 and a resource corresponding to original service data before an update.

In a process of activating or updating the SPS resource in this embodiment, one piece of DCI can implement a process of updating the new SPS resource and releasing the target SPS resource, thereby reducing signaling overheads.

Further, in the embodiment shown in FIG. 4, the second service data belongs to one piece of multi-cycle service data, where the multi-cycle service data includes a plurality of pieces of correlated service data in different cycles, and service data in each cycle is corresponding to a SPS resource. Correspondingly, the target SPS resource includes resources corresponding to the service data in the cycles, and the base station releases resources corresponding to the service data in the cycles based on an association relationship between the identifier of the second SPS and an identifier of another SPS.

Specifically, a specific association relationship may exist among the released resources corresponding to identifiers of a plurality of second SPSs. For example, the cyclic data always arrives, at a fixed interval (for example, an interval of 100 ms), in a form of one large data segment (300 bytes) and four small data segments (190 bytes). In this case, an eNB may activate two second SPS resources for the UE, where one resource is used to transmit 190-byte data whose cycle is 100 ms, and the other resource is used to transmit 300-byte data whose cycle is 500 ms. When the cyclic data has been transmitted, resources corresponding to identifiers of two second SPSs need to be released simultaneously. In this embodiment, the UE only needs to report an identifier of one second SPS to the base station, and the base station releases, based on the association relationship between the identifier of the second SPS and an identifier of another SPS, the resources corresponding to the service data in the cycles. In addition, the UE releases, according to an instruction of the DCI, the resources corresponding to the service data in the cycles.

In this embodiment, the foregoing association relationship may be obtained by detecting the service data when the UE sends the service data, and then the UE sends the association relationship to the base station. Alternatively, the association relationship may be obtained by the base station based on the service information of the data reported by the UE, and the base station sends the association relationship to the UE.

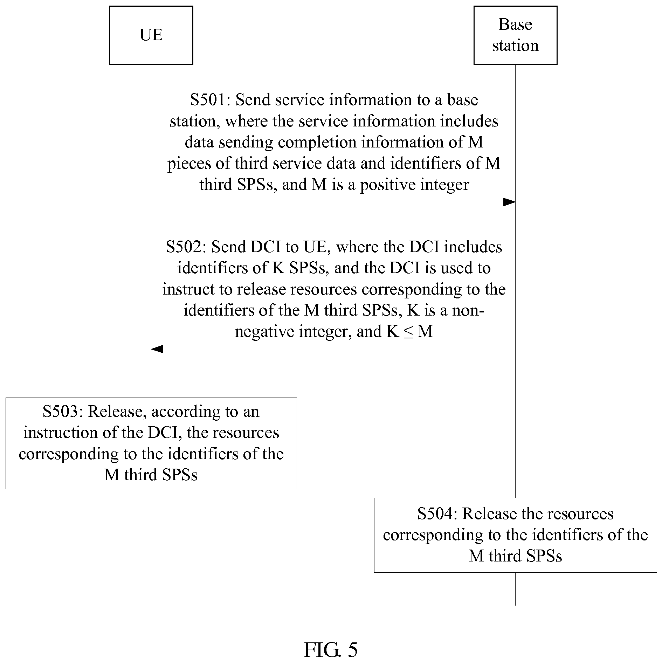

FIG. 5 is a signaling flowchart 4 of a method for releasing an SPS resource according to an embodiment of the present invention. As shown in FIG. 5, the method includes the following steps.

S501: UE sends service information to a base station, where the service information includes data sending completion information of M pieces of third service data and identifiers of M third SPSs, and M is a positive integer.

S502: The base station sends DCI to the UE, where the DCI includes identifiers of K SPSs, and the DCI is used to instruct to release resources corresponding to the identifiers of the M third SPSs, K is a non-negative integer, and K ≤ M.

S503: The UE releases, according to an instruction of the DCI, the resources corresponding to the identifiers of the M third SPSs.

S504: The base station releases the resources corresponding to the identifiers of the M third SPSs.

In this embodiment, there is no strict time sequence relationship between step 503 and step 504.

In a specific implementation process, when the service data changes, if data on a plurality of SPSs has been transmitted, the UE sends the service information to the base station. The base station sends DCI to the UE, and the DCI may be release DCI. The DCI includes identifiers of K SPSs, and the identifier may be an index. If resources corresponding to identifiers of two SPSs are to be released, the release DCI includes indexes corresponding to the identifiers of the two SPSs. Different from DCI used for activation or update, the release DCI does not need to indicate time-and-frequency-domain resources, so that bits originally used to indicate the time-and-frequency-domain resources may be reused to indicate indexes of SPSs of to-be-released resources, adding no additional bits to the DCI.

Optionally, the release DCI may alternatively include an index of only one to-be-released SPS resource. If resources corresponding to identifiers of two SPSs are to be released, the release DCI includes only an index corresponding to one of the SPSs, for example, an index corresponding to a reported first SPS, or a smaller index.

The UE releases the resources corresponding to the identifiers of the M third SPSs according to the instruction of the DCI, and correspondingly, the base station also releases the resources corresponding to the identifiers of the M third SPSs.

A person skilled in the art may understand that when the identifiers of the SPSs have the association relationship in the embodiment shown in FIG. 4, that is, the identifiers of the M third SPSs have an association relationship, the UE may report an identifier of only one SPS, and the release DCI sent by the base station to the UE may also include the identifier of the only one SPS. The UE and the base station simultaneously release, based on the association relationship, the resources corresponding to the identifiers of the M third SPSs.

In this embodiment, when no new SPS resources need to be activated, the resources corresponding to identifiers of a plurality of SPSs may be released simultaneously, reducing signaling overheads of the DCI.

The foregoing mainly describes the solutions provided in the embodiments of the present invention from the perspective of interaction between the base station and the UE. It may be understood that, to implement the foregoing functions, the base station and the UE include a corresponding hardware structure and/or software module for performing each of the functions. With reference to the examples described in the embodiments disclosed in the present invention, units and algorithm steps can be implemented by hardware or a combination of hardware and computer software in this embodiment of the present invention. Whether a function is performed by hardware or computer software driving hardware depends on particular applications and design constraints of the technical solutions. A person skilled in the art may use different methods to implement the described functions for each particular application, but it should not be considered that the implementation goes beyond the scope of the technical solutions in the embodiments of the present invention.

In this embodiment of the present invention, functional units of the base station and the UE may be divided based on the foregoing method example. For example, functional units may be divided in correspondence to functions, or two or more functions may be integrated into one processing unit. The integrated unit may be implemented in a form of hardware, or may be implemented in a form of a software functional module. It should be noted that the unit division in the embodiments of the present invention is an example, and is merely logical function division. There may be another division manner in an actual implementation.

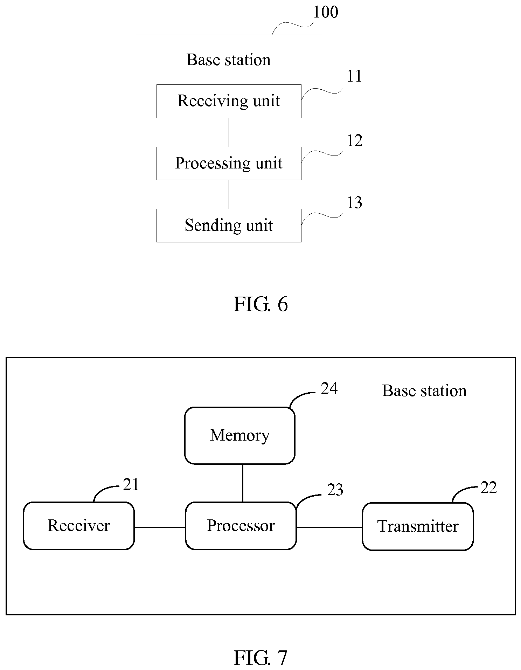

When an integrated unit is used, FIG. 6 is a schematic structural diagram of a base station according to an embodiment of the present invention. The base station 100 includes a receiving unit 11, a processing unit 12, and a sending unit 13. The receiving unit 11 and the sending unit 13 are configured to support communications between the base station and the UE. The processing unit 12 is configured to perform control management on an action of the base station.

Specifically, the receiving unit 11 is configured to receive service information sent by the UE. The service information includes first service information of first service data, the first service information includes service change information or initial configuration information, and the service change information includes at least one of cycle change information and update information.

The processing unit 12 is configured to determine, based on the first service information, semi-persistent scheduling SPS information corresponding to the first service data. The SPS information includes indication information of a new SPS resource.

The sending unit 13 is configured to send downlink control information DCI to the UE. The DCI includes the SPS information, and the DCI is used to instruct the UE to activate the new SPS resource and release a target SPS resource, and the target SPS resource is an SPS resource corresponding to second service data that has been transmitted.

The base station provided in this embodiment may be configured to execute the method embodiment shown in FIG. 2, with a similar implementation principle and similar technical effects. Details are not described in this embodiment again.

Optionally, the receiving unit 11 is further configured to support the base station in performing S301 shown in FIG. 3, S401 shown in FIG. 4, S501 shown in FIG. 5, and/or another process of the technology described herein. The processing unit 12 is further configured to support the base station in performing S302 and S305 shown in FIG. 3, S402 and S405 shown in FIG. 4, S504 shown in FIG. 5, and/or another process of the technology described herein. The sending unit 13 is further configured to support the base station in performing S303 shown in FIG. 3, S403 shown in FIG. 4, S502 shown in FIG. 5, and/or another process of the technology described herein. For a specific implementation process and principle of each unit, refer to the foregoing method embodiments, and details are not described in this embodiment again.

The receiving unit 11 may be a receiver, the sending unit 13 may be a transmitter, and the processing unit 12 may be a processor or a controller, for example, may be a central processing unit (CPU), a general purpose processor, a digital signal processor (DSP), an application-specific integrated circuit (ASIC), a field programmable gate array (FPGA), another programmable logic device, a transistor logic device, a hardware component, or any combination thereof. The processing unit may implement or execute various example logical blocks, units, and circuits that are described with reference to the content disclosed in the present invention. The processor may alternatively be a combination implementing a computing function, for example, a combination including one or more microprocessors, or a combination of a DSP and a microprocessor.

When the processing unit 12 is a processor, the receiving unit 11 is a receiver, and the sending unit 13 is a transmitter, the base station in this embodiment of the present invention may be shown in FIG. 7. FIG. 7 is a schematic structural diagram of hardware of a base station according to an embodiment of the present invention. As shown in FIG. 7, the base station may include a receiver 21, a transmitter 22, a processor 23, and a memory 24. The memory 24 may include a high-speed RAM memory, or may include a nonvolatile memory NVM, for example, at least one magnetic disk memory. The memory 24 may store computer executable program code, the program code includes an instruction, and when the processor 23 executes the instruction, the instruction enables the processor 23 to complete various processing functions and implement the method steps of the embodiments.

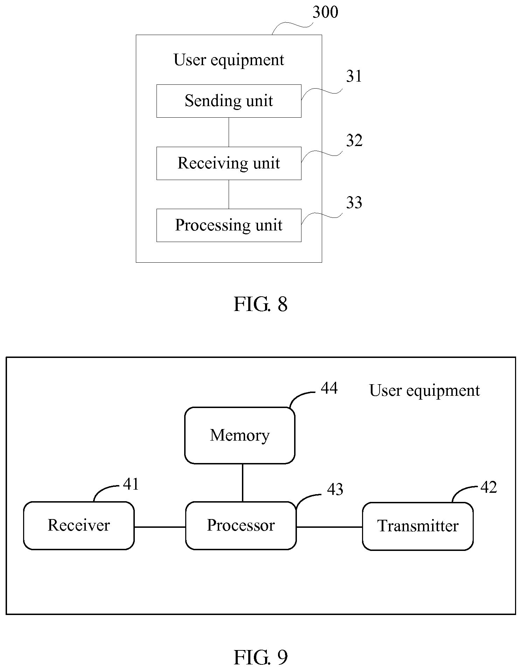

When an integrated unit is used, FIG. 8 is a schematic structural diagram of user equipment according to an embodiment of the present invention. The user equipment 300 includes a sending unit 31, a receiving unit 32, and a processing unit 33. The sending unit 31 and the receiving unit 32 are configured to support communications between the UE and the base station. The processing unit 33 is configured to perform control management on an action of the UE.

The sending unit 31 is configured to send service information to a base station. The service information includes first service information of first service data, the first service information includes service change information or initial configuration information, and the service change information includes at least one of cycle change information and update information.

The receiving unit 32 is configured to receive downlink control information DCI sent by the base station. The DCI includes semi-persistent scheduling SPS information corresponding to the first service data, the SPS information is determined by the base station based on the first service information, the SPS information includes indication information of a new SPS resource, and the DCI is used to instruct the UE to activate the new SPS resource and release a target SPS resource.

The processing unit 33 is configured to activate the new SPS resource and release the target SPS resource according to an instruction of the DCI. The target SPS resource is an SPS resource corresponding to second service data that has been transmitted.

The user equipment according to this embodiment may be configured to execute the method embodiment shown in FIG. 2, with a similar implementation principle and similar technical effects. Details are not described in this embodiment again.

Optionally, the sending unit 31 is further configured to support the base station in performing S301 shown in FIG. 3, S401 shown in FIG. 4, S501 shown in FIG. 5, and/or another process of the technology described herein. The receiving unit 32 is further configured to support the base station in performing S303 shown in FIG. 3, S403 shown in FIG. 4, S502 shown in FIG. 5, and/or another process of the technology described herein. The processing unit 33 is further configured to support the base station in performing S304 shown in FIG. 3, S404 shown in FIG. 4, S503 shown in FIG. 5, and/or another process of the technology described herein. For a specific implementation process and principle of each unit, refer to the foregoing method embodiments, and details are not described in this embodiment again.

The receiving unit 32 may be a receiver, the sending unit 31 may be a transmitter, and the processing unit 33 may be a processor or a controller, for example, may be a central processing unit (CPU), a general purpose processor, a digital signal processor (DSP), an application-specific integrated circuit (ASIC), a field programmable gate array (FPGA), another programmable logic device, a transistor logic device, a hardware component, or any combination thereof. The processing unit may implement or execute various example logical blocks, units, and circuits that are described with reference to the content disclosed in the present invention. The processor may alternatively be a combination implementing a computing function, for example, a combination including one or more microprocessors, or a combination of a DSP and a microprocessor.

When the processing unit 33 is a processor, the receiving unit 32 is a receiver, and the sending unit 31 is a transmitter, the user equipment in this embodiment of the present invention may be shown in FIG. 9. FIG. 9 is a schematic structural diagram of hardware of a base station according to an embodiment of the present invention. As shown in FIG. 9, the user equipment may include a receiver 41, a transmitter 42, a processor 43, and a memory 44. The memory 44 may include a high-speed RAM memory, or may include a nonvolatile memory NVM, for example, at least one magnetic disk memory. The memory 44 may store computer executable program code, the program code includes an instruction, and when the processor 43 executes the instruction, the instruction enables the processor 43 to complete various processing functions and implement the method steps of the embodiments.

Finally, it should be noted that the foregoing embodiments are merely intended to describe the technical solutions of the present invention, but not to limit the present invention. Although the present invention is described in detail with reference to the foregoing embodiments, a person of ordinary skill in the art should understand that they may still make modifications to the technical solutions described in the foregoing embodiments without departing from the scope of the technical solutions of the embodiments of the present invention.

## Claims

1. A method for releasing a semi-persistent scheduling resource, comprising:
a) receiving (S201, S301, S401, S501), by a base station (100), service information sent by user equipment (300), UE, wherein the service information comprises first service information of first service data, the first service information comprises service change information or initial configuration information, and the service change information comprises at least one of cycle change information and update information;
b) determining (S202, S302, S403), by the base station based on the first service information, semi-persistent scheduling, SPS, information corresponding to the first service data, wherein the SPS information comprises indication information of a new SPS resource; and
c) sending (S203, S303, S403, S502), by the base station, downlink control information, DCI, to the UE, wherein the DCI comprises the SPS information, and the DCI is used to instruct the UE to activate the new SPS resource and release a target SPS resource, wherein the target SPS resource is an SPS resource corresponding to second service data that has been transmitted; and
d) wherein the service information further comprises second service information corresponding to the second service data, and the second service information comprises data sending completion information and an identifier of a second SPS corresponding to the second service data;
e) the SPS information further comprises an identifier of a first SPS corresponding to the new SPS resource;
f) the target SPS resource comprises a resource corresponding to the identifier of the second SPS; and
g) after the sending, by the base station, DCI to the UE, the method further comprises:
releasing, by the base station, the target SPS resource based on the identifier of the second SPS.

2. The method according to claim 1, wherein the first service data is multi-cycle service data, wherein the multi-cycle service data comprises a plurality of pieces of correlated service data having respectively different transmission cycles, service data in each transmission cycle corresponds to a respective SPS resource, and the second service data is one of the plurality of pieces of correlated service data;
the target SPS resource comprises resources corresponding to the service data in the cycles; and
the releasing, by the base station, the target SPS resource based on the identifier of the second SPS comprises:
releasing, by the base station, the target SPS resource based on an association relationship between the identifier of the second SPS and an identifier of another SPS.

3. The method according to claim 2, wherein the method further comprises:
receiving, by the base station, the association relationship sent by the UE; or
sending, by the base station, the association relationship to the UE.

4. The method according to claim 1, wherein if the service change information comprises the cycle change information, or the service change information comprises the cycle change information and the update information, and the first service data comprises service data whose transmission cycle is a first cycle and service data whose transmission cycle is a second cycle, the second service data is the service data whose transmission cycle is the first cycle, wherein the first cycle is a cycle before a change, and the second cycle is a cycle after the change;
the first service information further comprises an identifier of an original first SPS corresponding to the service data whose transmission cycle is the first cycle;
the SPS information further comprises an identifier of a new first SPS corresponding to the new SPS resource, wherein the new SPS resource is a resource corresponding to the service data whose transmission cycle is the second cycle;
the target SPS resource comprises a resource corresponding to the identifier of the original first SPS; and
after the sending, by the base station, DCI to the UE, the method further comprises:
releasing, by the base station, the target SPS resource based on the identifier of the original first SPS.

5. A method for releasing a semi-persistent scheduling resource, comprising:
a) sending (S201, S301, S401, S501), by user equipment (300), UE, service information to a base station (100), wherein the service information comprises first service information of first service data, the first service information comprises service change information or initial configuration information, and the service change information comprises at least one of cycle change information and update information;
b) receiving (S203, S303, S403, S502), by the UE, downlink control information, DCI, sent by the base station, wherein the DCI comprises semi-persistent scheduling SPS information corresponding to the first service data, the SPS information is determined (S202, S302, S403) by the base station based on the first service information, the SPS information comprises indication information of a new SPS resource, and the DCI is used to instruct the UE to activate the new SPS resource and release a target SPS resource; and
c) activating (S204, S304, S404), by the UE, the new SPS resource and releasing the target SPS resource according to an instruction of the DCI, wherein the target SPS resource is an SPS resource corresponding to second service data that has been transmitted; and
d) wherein the service information further comprises second service information corresponding to the second service data, and the second service information comprises data sending completion information and an identifier of a second SPS corresponding to the second service data;
e) the SPS information further comprises an identifier of a first SPS corresponding to the new resource; and
f) the target SPS resource comprises a resource corresponding to the identifier of the second SPS.

6. The method according to claim 5, wherein the first service data is multi-cycle service data, wherein the multi-cycle service data comprises a plurality of pieces of correlated service data having respectively different transmission cycles, service data in each transmission cycle corresponds to a respective SPS resource, and the second service data is one of the plurality of pieces of correlated service data;
the target SPS resource comprises resources corresponding to the service data in the cycles; and
the activating, by the UE, the new SPS resource and releasing the target SPS resource according to an instruction of the DCI comprises:
activating, by the UE, the new SPS resource and releasing the target SPS resource according to an instruction of the DCI and an association relationship.

7. The method according to claim 6, wherein the method further comprises:
receiving, by the UE, the association relationship sent by the base station; or
sending, by the UE, the association relationship to the base station.

8. The method according to claim 5, wherein if the service change information comprises the cycle change information, or the service change information comprises the cycle change information and the update information, and the first service data comprises service data whose transmission cycle is a first cycle and service data whose transmission cycle is a second cycle, the second service data is the service data whose transmission cycle is the first cycle, wherein the first cycle is a cycle before a change, and the second cycle is a cycle after the change;
the first service information further comprises an identifier of an original first SPS corresponding to the service data whose transmission cycle is the first cycle;
the SPS information further comprises an identifier of a new first SPS corresponding to the new SPS resource, wherein the new SPS resource is a resource corresponding to the service data whose transmission cycle is the second cycle; and
the target SPS resource comprises a resource corresponding to the identifier of the original first SPS.

9. Abase station (100), comprising:
a) a receiving unit (11), configured to receive service information sent by user equipment UE, wherein the service information comprises first service information of first service data, the first service information comprises service change information or initial configuration information, and the service change information comprises at least one of cycle change information and update information;
b) a processing unit (12), configured to determine, based on the first service information, semi-persistent scheduling, SPS, information corresponding to the first service data, wherein the SPS information comprises indication information of a new SPS resource; and
c) a sending unit (13), configured to send downlink control information, DCI, to the UE, wherein the DCI comprises the SPS information, and the DCI is used to instruct the UE to activate the new SPS resource and release a target SPS resource, wherein the target SPS resource is an SPS resource corresponding to second service data that has been transmitted; and
d) wherein the service information further comprises second service information corresponding to the second service data, and the second service information comprises data sending completion information and an identifier of a second SPS corresponding to the second service data;
e) the SPS information further comprises an identifier of a first SPS corresponding to the new SPS resource;
f) the target SPS resource comprises a resource corresponding to the identifier of the second SPS; and
g) the processing unit is further configured to: after the DCI is sent to the UE, release the target SPS resource based on the identifier of the second SPS.

10. The base station according to claim 9, wherein the first service data is multi-cycle service data, wherein the multi-cycle service data comprises a plurality of pieces of correlated service data having respectively different transmission cycles, service data in each transmission cycle corresponds to a respective SPS resource, and the second service data is one of the plurality of pieces of correlated service data;
the target SPS resource comprises resources corresponding to the service data in the cycles; and
the processing unit is specifically configured to release the target SPS resource based on an association relationship between the identifier of the second SPS and an identifier of another SPS.

11. The base station according to claim 10, wherein
the receiving unit is further configured to receive the association relationship sent by the UE; or
the sending unit is further configured to send the association relationship to the UE.

12. The base station according to claim 9, wherein if the service change information comprises the cycle change information, or the service change information comprises the cycle change information and the update information, and the first service data comprises service data whose transmission cycle is a first cycle and service data whose transmission cycle is a second cycle, the second service data is the service data whose transmission cycle is the first cycle, wherein the first cycle is a cycle before a change, and the second cycle is a cycle after the change;
the first service information further comprises an identifier of an original first SPS corresponding to the service data whose transmission cycle is the first cycle;
the SPS information further comprises an identifier of a new first SPS corresponding to the new SPS resource, wherein the new SPS resource is a resource corresponding to the service data whose transmission cycle is the second cycle;
the target SPS resource comprises a resource corresponding to the identifier of the original first SPS; and
the processing unit is further configured to: after the DCI is sent to the UE, release the target SPS resource based on the identifier of the original first SPS.

13. User equipment (300), UE, comprising:
a) a sending unit (31), configured to send service information to a base station, wherein the service information comprises first service information of first service data, the first service information comprises service change information or initial configuration information, and the service change information comprises at least one of cycle change information and update information;
b) a receiving unit (32), configured to receive downlink control information, DCI, sent by the base station, wherein the DCI comprises semi-persistent scheduling, SPS, information corresponding to the first service data, the SPS information is determined by the base station based on the first service information, the SPS information comprises indication information of a new SPS resource, and the DCI is used to instruct the user equipment UE to activate the new SPS resource and release a target SPS resource; and
c) a processing unit (33), configured to activate the new SPS resource and release the target SPS resource according to an instruction of the DCI, wherein the target SPS resource is an SPS resource corresponding to second service data that has been transmitted; and
d) wherein the service information further comprises second service information corresponding to the second service data, and the second service information comprises data sending completion information and an identifier of a second SPS corresponding to the second service data;
e) the SPS information further comprises an identifier of a first SPS corresponding to the new resource; and
f) the target SPS resource comprises a resource corresponding to the identifier of the second SPS.

14. The user equipment according to claim 13, wherein the first service data is multi-cycle service data, wherein the multi-cycle service data comprises a plurality of pieces of correlated service data having respectively different transmission cycles, service data in each transmission cycle corresponds to a respective SPS resource, and the second service data is one of the plurality of pieces of correlated service data;
the target SPS resource comprises resources corresponding to the service data in the cycles; and
the processing unit is specifically configured to activate the new SPS resource and release the target SPS resource according to an instruction of the DCI and the association relationship.

15. The user equipment according to claim 13, wherein if the service change information comprises the cycle change information, or the service change information comprises the cycle change information and the update information, and the first service data comprises service data whose transmission cycle is a first cycle and service data whose transmission cycle is a second cycle, the second service data is the service data whose transmission cycle is the first cycle, wherein the first cycle is a cycle before a change, and the second cycle is a cycle after the change;
the first service information further comprises an identifier of an original first SPS corresponding to the service data whose transmission cycle is the first cycle;
the SPS information further comprises an identifier of a new first SPS corresponding to the new SPS resource, wherein the new SPS resource is a resource corresponding to the service data whose transmission cycle is the second cycle; and
the target SPS resource comprises a resource corresponding to the identifier of the original first SPS.

## Patentansprüche

1. Verfahren zur Freigabe einer semipersistenten Planungsressource, umfassend:
a) Empfangen (S201, S301, S401, S501) von durch Benutzer-Equipment (300), UE, gesendeter Dienstinformation an einer Basisstation (100), wobei die Dienstinformation erste Dienstinformation von ersten Dienstdaten umfasst, die erste Dienstinformation Dienständerungsinformation oder anfängliche Einrichtungsinformation umfasst und die Dienständerungsinformation mindestens eine von Zyklusänderungsinformation und Aktualisierungsinformation umfasst;
b) Ermitteln (S202, S302, S403), durch die Basisstation basierend auf der ersten Dienstinformation, von Information zu semipersistenter Planung, SPS, entsprechend den ersten Dienstdaten, wobei die SPS-Information Angabeinformation einer neuen SPS-Ressource umfasst; und
c) Senden (S203, S303, S403, S502) von Downlink-Steuerungsinformation, DCI, durch die Basisstation zu dem UE, wobei die DCI die SPS-Information umfasst und die DCI verwendet wird, um das UE anzuweisen, die neue SPS-Ressource zu aktivieren und eine Ziel-SPS-Ressource freizugeben, wobei die Ziel-SPS-Ressource eine SPS-Ressource ist, die zweiten Dienstdaten entspricht, die gesendet worden sind; und
d) wobei die Dienstinformation ferner zweite Dienstinformation umfasst, die den zweiten Dienstdaten entspricht, und die zweite Dienstinformation Daten-Sendeabschlussinformation und eine Kennung einer den zweiten Dienstdaten entsprechenden zweiten SPS umfasst;
e) die SPS-Information ferner eine Kennung einer der neuen SPS-Ressource entsprechenden ersten SPS umfasst;
f) die Ziel-SPS-Ressource eine der Kennung der zweiten SPS entsprechende Ressource umfasst; und
g) das Verfahren nach dem Senden von DCI durch die Basisstation zu dem UE ferner umfasst:
Freigeben der Ziel-SPS-Ressource durch die Basisstation, basierend auf der Kennung der zweiten SPS.

2. Verfahren nach Anspruch 1, wobei die ersten Dienstdaten "Multicycle"-Dienstdaten sind, wobei die "Multicycle"-Dienstdaten eine Mehrzahl von Teilstücken korrelierter Dienstdaten umfassen, die jeweils unterschiedliche Übertragungszyklen aufweisen; die Dienstdaten in jedem Übertragungszyklus einer dazugehörigen SPS-Ressource entsprechen und die zweiten Dienstdaten eines der Mehrzahl von Teilstücken korrelierter Dienstdaten sind;
die Ziel-SPS-Ressource Ressourcen umfasst, die den Dienstdaten in den Zyklen entsprechen; und
das Freigeben der Ziel-SPS-Ressource durch die Basisstation, basierend auf der Kennung der zweiten SPS, umfasst:
Freigeben der Ziel-SPS-Ressource durch die Basisstation, basierend auf einer Assoziationsbeziehung zwischen der Kennung der zweiten SPS und einer Kennung einer anderen SPS.

3. Verfahren nach Anspruch 2, wobei das Verfahren ferner umfasst:
Empfangen der durch das UE gesendeten Assoziationsbeziehung durch die Basisstation; oder
Senden der Assoziationsbeziehung durch die Basisstation zu dem UE.

4. Verfahren nach Anspruch 1, wobei, falls die Dienständerungsinformation die Zyklusänderungsinformation umfasst oder die Dienständerungsinformation die Zyklusänderungsinformation und die Aktualisierungsinformation umfasst und die ersten Dienstdaten Dienstdaten umfassen, deren Übertragungszyklus ein erster Zyklus ist, und Dienstdaten, deren Übertragungszyklus ein zweiter Zyklus ist, die zweiten Dienstdaten die Dienstdaten sind, deren Übertragungszyklus der erste Zyklus ist, wobei der erste Zyklus ein Zyklus vor einer Änderung ist und der zweite Zyklus ein Zyklus nach der Änderung ist;
die erste Dienstinformation ferner eine Kennung einer ursprünglichen ersten SPS umfasst, die den Dienstdaten entspricht, deren Übertragungszyklus der erste Zyklus ist;
die SPS-Information ferner eine Kennung einer neuen ersten SPS umfasst, die der neuen SPS-Ressource entspricht, wobei die neue SPS-Ressource eine Ressource ist, die den Dienstdaten entspricht, deren Übertragungszyklus der zweite Zyklus ist;
die Ziel-SPS-Ressource eine Ressource umfasst, die der Kennung der ursprünglichen ersten SPS entspricht; und
das Verfahren nach dem Senden der DCI durch die Basisstation zu dem UE ferner umfasst:
Freigeben der Ziel-SPS-Ressource durch die Basisstation, basierend auf der Kennung der ursprünglichen ersten SPS.

5. Verfahren zur Freigabe einer semipersistenten Planungsressource, umfassend:
a) Senden (S201, S301, S401, S501), durch Benutzer-Equipment (300), UE, von Dienstinformation zu einer Basisstation (100), wobei die Dienstinformation erste Dienstinformation von ersten Dienstdaten umfasst, die erste Dienstinformation Dienständerungsinformation oder anfängliche Einrichtungsinformation umfasst und die Dienständerungsinformation mindestens eine von Zyklusänderungsinformation und Aktualisierungsinformation umfasst;
b) Empfangen (S203, S303, S403, S502) von durch die Basisstation gesendeter Downlink-Steuerungsinformation, DCI, durch das UE, wobei die DCI die semipermanente Planungs-SPS-Information umfasst, die den ersten Dienstdaten entspricht; die SPS-Information durch die Basisstation basierend auf der ersten Dienstinformation ermittelt wird (S202, S302, S403); die SPS-Information Angabeinformation einer neuen SPS-Ressource umfasst und die DCI verwendet wird, um das UE anzuweisen, die neue SPS-Ressource zu aktivieren und eine Ziel-SPS-Ressource freizugeben; und
c) Aktivieren (S204, S304, S404) der neuen SPS-Ressource durch das UE und Freigeben der Ziel-SPS-Ressource entsprechend einer Anweisung der DCI, wobei die Ziel-SPS-Ressource eine SPS-Ressource ist, die zweiten Dienstdaten, die übertragen worden sind, entspricht; und
d) wobei die Dienstinformation ferner den zweiten Dienstdaten entsprechende zweite Dienstinformation umfasst und die zweite Dienstinformation Daten-Sendeabschlussinformation und eine Kennung einer den zweiten Dienstdaten entsprechenden zweiten SPS umfasst;
e) die SPS-Information ferner eine Kennung einer der neuen Ressource entsprechenden ersten SPS umfasst;
f) die Ziel-SPS-Ressource eine der Kennung der zweiten SPS entsprechende Ressource umfasst.

6. Verfahren nach Anspruch 5, wobei die ersten Dienstdaten "Multicycle"-Dienstdaten sind, wobei die "Multicycle"-Dienstdaten eine Mehrzahl von Teilstücken korrelierter Dienstdaten umfassen, die jeweils unterschiedliche Übertragungszyklen aufweisen; die Dienstdaten in jedem Übertragungszyklus einer dazugehörigen SPS-Ressource entsprechen und die zweiten Dienstdaten eines der Mehrzahl von Teilstücken korrelierter Dienstdaten sind;
die Ziel-SPS-Ressource Ressourcen umfasst, die den Dienstdaten in den Zyklen entsprechen; und
das Aktivieren der neuen SPS-Ressource und das Freigeben der Ziel-SPS-Ressource durch das UE entsprechend einer Anweisung der DCI umfassen:
Aktivieren der neuen SPS-Ressource und Freigeben der Ziel-SPS-Ressource durch das UE entsprechend einer Anweisung der DCI und einer Assoziationsbeziehung.

7. Verfahren nach Anspruch 6, wobei das Verfahren ferner umfasst:
Empfangen der durch die Basisstation gesendeten Assoziationsbeziehung durch das UE; oder
Senden der Assoziationsbeziehung durch das UE zu der Basisstation.

8. Verfahren nach Anspruch 5, wobei, falls die Dienständerungsinformation die Zyklusänderungsinformation umfasst oder die Dienständerungsinformation die Zyklusänderungsinformation und die Aktualisierungsinformation umfasst und die ersten Dienstdaten Dienstdaten umfassen, deren Übertragungszyklus ein erster Zyklus ist, und Dienstdaten, deren Übertragungszyklus ein zweiter Zyklus ist, die zweiten Dienstdaten die Dienstdaten sind, deren Übertragungszyklus der erste Zyklus ist, wobei der erste Zyklus ein Zyklus vor einer Änderung ist und der zweite Zyklus ein Zyklus nach der Änderung ist;
die erste Dienstinformation ferner eine Kennung einer ursprünglichen ersten SPS umfasst, die den Dienstdaten entspricht, deren Übertragungszyklus der erste Zyklus ist;
die SPS-Information ferner eine Kennung einer neuen ersten SPS umfasst, die der neuen SPS-Ressource entspricht, wobei die neue SPS-Ressource eine Ressource ist, die den Dienstdaten entspricht, deren Übertragungszyklus der zweite Zyklus ist; und die Ziel-SPS-Ressource eine Ressource umfasst, die der Kennung der ursprünglichen ersten SPS entspricht.

9. Basisstation (100), umfassend:
a) eine Empfangseinheit (11), ausgelegt zum Empfangen von durch Benutzer-Equipment, UE, gesendeter Dienstinformation, wobei die Dienstinformation erste Dienstinformation von ersten Dienstdaten umfasst, die erste Dienstinformation Dienständerungsinformation oder anfängliche Einrichtungsinformation umfasst und die Dienständerungsinformation mindestens eine von Zyklusänderungsinformation und Aktualisierungsinformation umfasst;
b) eine Verarbeitungseinheit (12), ausgelegt zum Ermitteln, basierend auf der ersten Dienstinformation, von Information zu semipersistenter Planung, SPS, entsprechend den ersten Dienstdaten, wobei die SPS-Information Angabeinformation einer neuen SPS-Ressource umfasst; und
c) eine Sendeeinheit (13), ausgelegt zum Senden von Downlink-Steuerungsinformation, DCI, zu dem UE, wobei die DCI die SPS-Information umfasst und die DCI verwendet wird, um das UE anzuweisen, die neue SPS-Ressource zu aktivieren und eine Ziel-SPS-Ressource freizugeben, wobei die Ziel-SPS-Ressource eine SPS-Ressource ist, die zweiten Dienstdaten entspricht, die gesendet worden sind; und
d) wobei die Dienstinformation ferner zweite Dienstinformation umfasst, die den zweiten Dienstdaten entspricht, und die zweite Dienstinformation Daten-Sendeabschlussinformation und eine Kennung einer den zweiten Dienstdaten entsprechenden zweiten SPS umfasst;
e) die SPS-Information ferner eine Kennung einer der neuen SPS-Ressource entsprechenden ersten SPS umfasst;
f) die Ziel-SPS-Ressource eine der Kennung der zweiten SPS entsprechende Ressource umfasst; und
g) die Verarbeitungseinheit ferner dafür ausgelegt ist, nachdem die DCI zu dem UE gesendet worden ist, basierend auf der Kennung der zweiten SPS die Ziel-SPS-Ressource freizugeben.

10. Basisstation nach Anspruch 9, wobei die ersten Dienstdaten "Multicycle"-Dienstdaten sind, wobei die "Multicycle"-Dienstdaten eine Mehrzahl von Teilstücken korrelierter Dienstdaten umfassen, die jeweils unterschiedliche Übertragungszyklen aufweisen; die Dienstdaten in jedem Übertragungszyklus einer dazugehörigen SPS-Ressource entsprechen und die zweiten Dienstdaten eines der Mehrzahl von Teilstücken korrelierter Dienstdaten sind;
die Ziel-SPS-Ressource Ressourcen umfasst, die den Dienstdaten in den Zyklen entsprechen; und
die Verarbeitungseinheit im Einzelnen ausgelegt ist zum Freigeben der Ziel-SPS-Ressource basierend auf einer Assoziationsbeziehung zwischen der Kennung der zweiten SPS und einer Kennung einer anderen SPS.

11. Basisstation nach Anspruch 10, wobei
die Empfangseinheit ferner ausgelegt ist zum Empfangen der durch das UE gesendeten Assoziationsbeziehung; oder
die Sendeeinheit ferner ausgelegt ist zum Senden der Assoziationsbeziehung zu dem UE.

12. Basisstation nach Anspruch 9, wobei, falls die Dienständerungsinformation die Zyklusänderungsinformation umfasst oder die Dienständerungsinformation die Zyklusänderungsinformation und die Aktualisierungsinformation umfasst und die ersten Dienstdaten Dienstdaten umfassen, deren Übertragungszyklus ein erster Zyklus ist, und Dienstdaten, deren Übertragungszyklus ein zweiter Zyklus ist, die zweiten Dienstdaten die Dienstdaten sind, deren Übertragungszyklus der erste Zyklus ist, wobei der erste Zyklus ein Zyklus vor einer Änderung ist und der zweite Zyklus ein Zyklus nach der Änderung ist;
die erste Dienstinformation ferner eine Kennung einer ursprünglichen ersten SPS umfasst, die den Dienstdaten entspricht, deren Übertragungszyklus der erste Zyklus ist;
die SPS-Information ferner eine Kennung einer neuen ersten SPS umfasst, die der neuen SPS-Ressource entspricht, wobei die neue SPS-Ressource eine Ressource ist, die den Dienstdaten entspricht, deren Übertragungszyklus der zweite Zyklus ist;
die Ziel-SPS-Ressource eine Ressource umfasst, die der Kennung der ursprünglichen ersten SPS entspricht; und
die Verarbeitungseinheit ferner dafür ausgelegt ist, nachdem die DCI zu dem UE gesendet worden ist, die Ziel-SPS-Ressource basierend auf der Kennung der ursprünglichen ersten SPS freizugeben.

13. Benutzer-Equipment (300), UE, umfassend:
a) eine Sendeeinheit (31), ausgelegt zum Senden von Dienstinformation zu einer Basisstation, wobei die Dienstinformation erste Dienstinformation von ersten Dienstdaten umfasst, die erste Dienstinformation Dienständerungsinformation oder anfängliche Einrichtungsinformation umfasst und die Dienständerungsinformation mindestens eine von Zyklusänderungsinformation und Aktualisierungsinformation umfasst;
b) eine Empfangseinheit (32), ausgelegt zum Empfangen von durch die Basisstation gesendeter Downlink-Steuerungsinformation, DCI, wobei die DCI den ersten Dienstdaten entsprechende Information zu semipersistenter Planung, SPS, umfasst; die SPS-Information basierend auf der ersten Dienstinformation durch die Basisstation ermittelt wird; die SPS-Information Angabeinformation einer neuen SPS-Ressource umfasst und die DCI verwendet wird, um das Benutzer-Equipment UE anzuweisen, die neue SPS-Ressource zu aktivieren und eine Ziel-SPS-Ressource freizugeben; und
c) eine Verarbeitungseinheit (33), ausgelegt zum Aktivieren der neuen SPS-Ressource und Freigeben der Ziel-SPS-Ressource entsprechend einer Anweisung der DCI, wobei die Ziel-SPS-Ressource eine SPS-Ressource ist, die zweiten Dienstdaten entspricht, die gesendet worden sind; und
d) wobei die Dienstinformation ferner zweite Dienstinformation umfasst, die den zweiten Dienstdaten entspricht, und die zweite Dienstinformation Daten-Sendeabschlussinformation und eine Kennung einer den zweiten Dienstdaten entsprechenden zweiten SPS umfasst;
e) die SPS-Information ferner eine Kennung einer der neuen Ressource entsprechenden ersten SPS umfasst; und
f) die Ziel-SPS-Ressource eine der Kennung der zweiten SPS entsprechende Ressource umfasst.

14. Benutzer-Equipment nach Anspruch 13, wobei die ersten Dienstdaten "Multicycle"-Dienstdaten sind, wobei die "Multicycle"-Dienstdaten eine Mehrzahl von Teilstücken korrelierter Dienstdaten umfassen, die jeweils unterschiedliche Übertragungszyklen aufweisen; die Dienstdaten in jedem Übertragungszyklus einer dazugehörigen SPS-Ressource entsprechen und die zweiten Dienstdaten eines der Mehrzahl von Teilstücken korrelierter Dienstdaten sind;
die Ziel-SPS-Ressource Ressourcen umfasst, die den Dienstdaten in den Zyklen entsprechen; und
die Verarbeitungseinheit im Einzelnen ausgelegt ist zum Aktivieren der neuen SPS-Ressourcen und Freigeben der Ziel-SPS-Ressource entsprechend einer Anweisung der DCI und der Assoziationsbeziehung.

15. Benutzer-Equipment nach Anspruch 13, wobei, falls die Dienständerungsinformation die Zyklusänderungsinformation umfasst oder die Dienständerungsinformation die Zyklusänderungsinformation und die Aktualisierungsinformation umfasst und die ersten Dienstdaten Dienstdaten umfassen, deren Übertragungszyklus ein erster Zyklus ist, und Dienstdaten, deren Übertragungszyklus ein zweiter Zyklus ist, die zweiten Dienstdaten die Dienstdaten sind, deren Übertragungszyklus der erste Zyklus ist, wobei der erste Zyklus ein Zyklus vor einer Änderung ist und der zweite Zyklus ein Zyklus nach der Änderung ist;
die erste Dienstinformation ferner eine Kennung einer ursprünglichen ersten SPS umfasst, die den Dienstdaten entspricht, deren Übertragungszyklus der erste Zyklus ist;
die SPS-Information ferner eine Kennung einer neuen ersten SPS umfasst, die der neuen SPS-Ressource entspricht, wobei die neue SPS-Ressource eine Ressource ist, die den Dienstdaten entspricht, deren Übertragungszyklus der zweite Zyklus ist; und die Ziel-SPS-Ressource eine Ressource umfasst, die der Kennung der ursprünglichen ersten SPS entspricht.

## Revendications

1. Procédé de libération de ressource de programmation semi-persistante, comprenant les étapes consistant à :
a) recevoir (S201, S301, S401, S501), par une station de base (100), des informations de service envoyées par un équipement d'utilisateur (300), UE, les informations de service comprenant des premières informations de service de premières données de service, les premières informations de service comprenant des informations de changement de service ou des informations de configuration initiale, et les informations de changement de service comprenant au moins des informations de changement de cycle ou des informations de mise à jour ;
b) déterminer (S202, S302, S403), par la station de base d'après les premières informations de service, des informations de programmation semi-persistante, SPS, correspondant aux premières données de service, les informations SPS comprenant des informations d'indication d'une nouvelle ressource SPS ; et
c) envoyer (S203, S303, S403, S502), par la station de base, des informations de commande de liaison descendante, DCI, à l'UE, les DCI comprenant les informations SPS, et les DCI servant à ordonner à l'UE d'activer la nouvelle ressource SPS et de libérer une ressource SPS cible, la ressource SPS cible étant une ressource SPS correspondant à des deuxièmes données de service qui ont été émises ; et
d) dans lequel les informations de service comprennent également des deuxièmes informations de service correspondant aux deuxièmes données de service, et les deuxièmes informations de service comprennent des informations de terminaison d'envoi de données et un identifiant d'une deuxième SPS correspondant aux deuxièmes données de service ;
e) les informations SPS comprennent également un identifiant d'une première SPS correspondant à la nouvelle ressource SPS ;
f) la ressource SPS cible comprend une ressource correspondant à l'identifiant de la deuxième SPS ; et
g) le procédé, après l'envoi par la station de base des DCI à l'UE, comprend également l'étape consistant à :
libérer, par la station de base, la ressource SPS cible d'après l'identifiant de la deuxième SPS.

2. Procédé selon la revendication 1, dans lequel les premières données de service sont des données de service multi-cycles, les données de service multi-cycles comprenant une pluralité de morceaux de données de service corrélées ayant respectivement différents cycles d'émission, les données de service de chaque cycle d'émission correspondent à une ressource SPS respective, et les deuxièmes données de service sont l'un des morceaux de la pluralité de morceaux de données de service corrélées ; la ressource SPS cible comprend des ressources correspondant aux données de service dans les cycles ; et
la libération, par la station de base, de la ressource SPS cible d'après l'identifiant de la deuxième SPS comprend l'étape consistant à :
libérer, par la station de base, la ressource SPS cible d'après une relation d'association entre l'identifiant de la deuxième SPS et un identifiant d'une autre SPS.

3. Procédé selon la revendication 2, le procédé comprenant également l'étape consistant à :
recevoir, par la station de base, la relation d'association envoyée par l'UE ; ou
envoyer, par la station de base, la relation d'association à l'UE.

4. Procédé selon la revendication 1, dans lequel, si les informations de changement de service comprennent les informations de changement de cycle, ou si les informations de changement de service comprennent les informations de changement de cycle et les informations de mise à jour, et que les premières données de service comprennent des données de service dont le cycle d'émission est un premier cycle et des données de service dont le cycle d'émission est un deuxième cycle, les deuxièmes données de service sont les données de service dont le cycle d'émission est le premier cycle, le premier cycle étant un cycle avant un changement, et le deuxième cycle étant un cycle après le changement ;
les premières informations de service comprennent également un identifiant d'une première SPS originale correspondant aux données de service dont le cycle d'émission est le premier cycle ;
les informations SPS comprennent également un identifiant d'une nouvelle première SPS correspondant à la nouvelle ressource SPS, la nouvelle ressource SPS étant une ressource correspondant aux données de service dont le cycle d'émission est le deuxième cycle ;
la ressource SPS cible comprend une ressource correspondant à l'identifiant de la première SPS originale ; et
après l'envoi, par la station de base, des DCI à l'UE, le procédé comprend également l'étape consistant à :
libérer, par la station de base, la ressource SPS cible d'après l'identifiant de la première SPS originale.

5. Procédé de libération de ressource de programmation semi-persistante, comprenant les étapes consistant à :
a) envoyer (S201, S301, S401, S501), par un équipement d'utilisateur (300), UE, des informations de service à une station de base (100), UE, les informations de service comprenant des premières informations de service de premières données de service, les premières informations de service comprenant des informations de changement de service ou des informations de configuration initiale, et les informations de changement de service comprenant au moins des informations de changement de cycle ou des informations de mise à jour ;
b) recevoir (S203, S303, S403, S502), par l'UE, des informations de commande de liaison descendante, DCI, envoyées par la station de base, les DCI comprenant des informations de programmation semi-persistante SPS correspondant aux premières données de service, les informations SPS étant déterminées (S202, S302, S403) par la station de base d'après les premières informations de service, les informations SPS comprenant des informations d'indication d'une nouvelle ressource SPS, et les DCI servant à ordonner à l'UE d'activer la nouvelle ressource SPS et de libérer une ressource SPS cible ; et
c) activer (S204, S304, S404), par l'UE, la nouvelle ressource SPS et libérer la ressource SPS cible selon une instruction des DCI, la ressource SPS cible étant une ressource SPS correspondant à des deuxièmes données de service qui ont été émises ; et
d) dans lequel les informations de service comprennent également des deuxièmes informations de service correspondant aux deuxièmes données de service, et les deuxièmes informations de service comprennent des informations de terminaison d'envoi de données et un identifiant d'une deuxième SPS correspondant aux deuxièmes données de service ;
e) les informations SPS comprennent également un identifiant d'une première SPS correspondant à la nouvelle ressource ; et
f) la ressource SPS cible comprend une ressource correspondant à l'identifiant de la deuxième SPS.

6. Procédé selon la revendication 5, dans lequel les premières données de service sont des données de service multi-cycles, les données de service multi-cycles comprenant une pluralité de morceaux de données de service corrélées ayant respectivement différents cycles d'émission, les données de service de chaque cycle d'émission correspondent à une ressource SPS respective, et les deuxièmes données de service sont l'un des morceaux de la pluralité de morceaux de données de service corrélées ;
la ressource SPS cible comprend des ressources correspondant aux données de service dans les cycles ; et
l'activation, par l'UE, de la nouvelle ressource SPS et la libération de la ressource SPS cible selon une instruction des DCI comprend l'étape consistant à :
activer, par l'UE, la nouvelle ressource SPS et libérer la ressource SPS cible selon une instruction des DCI et une relation d'association.

7. Procédé selon la revendication 6, le procédé comprenant également l'étape consistant à :
recevoir, par l'UE, la relation d'association envoyée par la station de base ; ou
envoyer, par l'UE, la relation d'association à la station de base.

8. Procédé selon la revendication 5, dans lequel, si les informations de changement de service comprennent les informations de changement de cycle, ou si les informations de changement de service comprennent les informations de changement de cycle et les informations de mise à jour, et que les premières données de service comprennent des données de service dont le cycle d'émission est un premier cycle et des données de service dont le cycle d'émission est un deuxième cycle, les deuxièmes données de service sont les données de service dont le cycle d'émission est le premier cycle, le premier cycle étant un cycle avant un changement, et le deuxième cycle étant un cycle après le changement ;
les premières informations de service comprennent également un identifiant d'une première SPS originale correspondant aux données de service dont le cycle d'émission est le premier cycle ;
les informations SPS comprennent également un identifiant d'une nouvelle première SPS correspondant à la nouvelle ressource SPS, la nouvelle ressource SPS étant une ressource correspondant aux données de service dont le cycle d'émission est le deuxième cycle ; et
la ressource SPS cible comprend une ressource correspondant à l'identifiant de la première SPS originale.

9. Station de base (100), comprenant :
a) une unité de réception (11), configurée pour recevoir des informations de service envoyées par un équipement d'utilisateur UE, les informations de service comprenant des premières informations de service de premières données de service, les premières informations de service comprenant des informations de changement de service ou des informations de configuration initiale, et les informations de changement de service comprenant au moins des informations de changement de cycle ou des informations de mise à jour ;
b) une unité de traitement (12), configurée pour déterminer, d'après les premières informations de service, des informations de programmation semi-persistante, SPS, correspondant aux premières données de service, les informations SPS comprenant des informations d'indication d'une nouvelle ressource SPS ; et
c) une unité d'envoi (13), configurée pour envoyer des informations de commande de liaison descendante, DCI, à l'UE, les DCI comprenant les informations SPS, et les DCI servant à ordonner à l'UE d'activer la nouvelle ressource SPS et de libérer une ressource SPS cible, la ressource SPS cible étant une ressource SPS correspondant à des deuxièmes données de service qui ont été émises ; et
d) dans laquelle les informations de service comprennent également des deuxièmes informations de service correspondant aux deuxièmes données de service, et les deuxièmes informations de service comprennent des informations de terminaison d'envoi de données et un identifiant d'une deuxième SPS correspondant aux deuxièmes données de service ;
e) les informations SPS comprennent également un identifiant d'une première SPS correspondant à la nouvelle ressource SPS ;
f) la ressource SPS cible comprend une ressource correspondant à l'identifiant de la deuxième SPS ; et
g) l'unité de traitement est également configurée pour : après que les DCI ont été envoyées à l'UE, libérer la ressource SPS cible d'après l'identifiant de la deuxième SPS.

10. Station de base selon la revendication 9, dans laquelle les premières données de service sont des données de service multi-cycles, les données de service multi-cycles comprenant une pluralité de morceaux de données de service corrélées ayant respectivement différents cycles d'émission, les données de service de chaque cycle d'émission correspondent à une ressource SPS respective, et les deuxièmes données de service sont l'un des morceaux de la pluralité de morceaux de données de service corrélées ;
la ressource SPS cible comprend des ressources correspondant aux données de service dans les cycles ; et
l'unité de traitement est spécifiquement configurée pour libérer la ressource SPS cible d'après une relation d'association entre l'identifiant de la deuxième SPS et un identifiant d'une autre SPS.

11. Station de base selon la revendication 10, dans laquelle
l'unité de réception est également configurée pour recevoir la relation d'association envoyée par l'UE ; ou
l'unité d'envoi est également configurée pour envoyer la relation d'association à l'UE.

12. Station de base selon la revendication 9, dans laquelle, si les informations de changement de service comprennent les informations de changement de cycle, ou si les informations de changement de service comprennent les informations de changement de cycle et les informations de mise à jour, et que les premières données de service comprennent des données de service dont le cycle d'émission est un premier cycle et des données de service dont le cycle d'émission est un deuxième cycle, les deuxièmes données de service sont les données de service dont le cycle d'émission est le premier cycle, le premier cycle étant un cycle avant un changement, et le deuxième cycle étant un cycle après le changement ;
les premières informations de service comprennent également un identifiant d'une première SPS originale correspondant aux données de service dont le cycle d'émission est le premier cycle ;
les informations SPS comprennent également un identifiant d'une nouvelle première SPS correspondant à la nouvelle ressource SPS, la nouvelle ressource SPS étant une ressource correspondant aux données de service dont le cycle d'émission est le deuxième cycle ;
la ressource SPS cible comprend une ressource correspondant à l'identifiant de la première SPS originale ; et
l'unité de traitement est également configurée pour : après que les DCI ont été envoyées à l'UE, libérer la ressource SPS cible d'après l'identifiant de la première SPS originale.

13. Équipement d'utilisateur (300), UE, comprenant :
a) une unité d'envoi (31), configurée pour envoyer des informations de service à une station de base, les informations de service comprenant des premières informations de service de premières données de service, les premières informations de service comprenant des informations de changement de service ou des informations de configuration initiale, et les informations de changement de service comprenant au moins des informations de changement de cycle ou des informations de mise à jour ;
b) une unité de réception (32), configurée pour recevoir des informations de commande de liaison descendante, DCI, envoyées par la station de base, les DCI comprenant des informations de programmation semi-persistante, SPS, correspondant aux premières données de service, les informations SPS étant déterminées par la station de base d'après les premières informations de service, les informations SPS comprenant des informations d'indication d'une nouvelle ressource SPS, et les DCI servant à ordonner à l'équipement d'utilisateur UE d'activer la nouvelle ressource SPS et de libérer une ressource SPS cible ; et
c) une unité de traitement (33), configurée pour activer la nouvelle ressource SPS et libérer la ressource SPS cible selon une instruction des DCI, la ressource SPS cible étant une ressource SPS correspondant à des deuxièmes données de service qui ont été émises ; et
d) dans lequel les informations de service comprennent également des deuxièmes informations de service correspondant aux deuxièmes données de service, et les deuxièmes informations de service comprennent des informations de terminaison d'envoi de données et un identifiant d'une deuxième SPS correspondant aux deuxièmes données de service ;
e) les informations SPS comprennent également un identifiant d'une première SPS correspondant à la nouvelle ressource ; et
f) la ressource SPS cible comprend une ressource correspondant à l'identifiant de la deuxième SPS.

14. Équipement d'utilisateur selon la revendication 13, dans lequel les premières données de service sont des données de service multi-cycles, les données de service multi-cycles comprenant une pluralité de morceaux de données de service corrélées ayant respectivement différents cycles d'émission, les données de service de chaque cycle d'émission correspondent à une ressource SPS respective, et les deuxièmes données de service sont l'un des morceaux de la pluralité de morceaux de données de service corrélées ;
la ressource SPS cible comprend des ressources correspondant aux données de service dans les cycles ; et
l'unité de traitement est spécifiquement configurée pour activer la nouvelle ressource SPS et libérer la ressource SPS cible selon une instruction des DCI comprend et la relation d'association.

15. Équipement d'utilisateur selon la revendication 13, dans lequel, si les informations de changement de service comprennent les informations de changement de cycle, ou si les informations de changement de service comprennent les informations de changement de cycle et les informations de mise à jour, et que les premières données de service comprennent des données de service dont le cycle d'émission est un premier cycle et des données de service dont le cycle d'émission est un deuxième cycle, les deuxièmes données de service sont les données de service dont le cycle d'émission est le premier cycle, le premier cycle étant un cycle avant un changement, et le deuxième cycle étant un cycle après le changement ;
les premières informations de service comprennent également un identifiant d'une première SPS originale correspondant aux données de service dont le cycle d'émission est le premier cycle ;
les informations SPS comprennent également un identifiant d'une nouvelle première SPS correspondant à la nouvelle ressource SPS, la nouvelle ressource SPS étant une ressource correspondant aux données de service dont le cycle d'émission est le deuxième cycle ; et
la ressource SPS cible comprend une ressource correspondant à l'identifiant de la première SPS originale.
